# EUROPÄISCHE PATENTSCHRIFT

(11) **EP 3 494 324 B1**
(45) Veröffentlichungstag und Bekanntmachung des Hinweises auf die Patenterteilung: **07.07.2021**
(21) Anmeldenummer: 17751235.7
(22) Anmeldetag: 20.07.2017
(51) Int. Cl.: F16D 25/08, F16J 15/3284, F16J 15/32

(54) **DRUCKZYLINDER MIT EINEM ALS DICHTUNG DIENENDEN SCHRUMPFRING ZUR EINFACHEN MONTAGE AUF EINEM FÜHRUNGSHÜLSENBEREICH EINES GEHÄUSES**
PRESSURE CYLINDER HAVING A SHRINK RING WHICH SERVES AS A SEAL FOR SIMPLE MOUNTING ON A GUIDE SLEEVE REGION OF A HOUSING
CYLINDRE DE PRESSION COMPRENANT UNE BAGUE DE SERRAGE SERVANT DE GARNITURE D'ÉTANCHÉITÉ POUR MONTAGE FACILE AU NIVEAU DE LA ZONE DE MANCHON DE GUIDAGE D'UN BOÎTIER

(30) Priorität: 05.08.2016 DE 102016214551
(43) Veröffentlichungstag der Anmeldung: 12.06.2019
(73) Patentinhaber: Schaeffler Technologies AG & Co. KG, 91074 Herzogenaurach (DE)
(72) Erfinder: MARKERT, Melanie, 77855 Achern (DE); FRIETSCH, Frank, 77830 Bühlertal (DE)
(86) Internationale Anmeldenummer: PCT/DE2017/100603
(87) Internationale Veröffentlichungsnummer: WO 2018/024283

(56) Entgegenhaltungen:
- DE-A1- 2 327 280
- DE-A1- 10 314 962
- DE-A1-102013 219 842
- US-A- 5 380 015

## Beschreibung

Die Erfindung betrifft einen Druckzylinder, der vorzugsweise als Nehmerzylinder ausgestaltet ist, für ein Kupplungsbetätigungssystem eines Kraftfahrzeuges, wie eines Pkws, Lkws, Busses oder anderen Nutzfahrzeuges, mit einem Gehäuse und einem mit dem Gehäuse einen Druckraum einschließenden Kolben, wobei der Kolben entlang eines Führungshülsenbereiches des Gehäuses verschiebbar (geführt / gelagert) ist. Zudem betrifft die Erfindung eine Kupplung für einen Antriebsstrang eines Kraftfahrzeuges, mit einem den Druckzylinder aufweisenden Kupplungsbetätigungssystem.

Gattungsgemäße Druckzylinder sind aus dem Stand der Technik etwa mit der DE 10 2011 011 225 A1 offenbart, wobei konkret ein Nehmerzylinder für ein hydraulisches Ausrücksystem einer Reibungskupplung gezeigt ist.

Weiterer Stand der Technik ist aus der DE 10 2013 219 841 A1 bekannt.

Bei dem Einsatz des Kraftfahrzeuges in staubreichen Umgebungen besteht insbesondere der Nachteil, dass die bekannten Druckzylinder einem relativ hohen Verschleiß ausgesetzt sind. Bei manchen Druckzylindern der bekannten Art hat es sich sogar gezeigt, dass deren Druckraum undicht werden kann. Dies führt in bestimmten Fällen bis zu einem Ausfall des entsprechenden Kupplungsbetätigungssystems. Daher besteht prinzipiell die Überlegung, Dichtungen zur zusätzlichen Abdichtung gegenüber Staub / Schmutz vorzusehen. Bei diesen meist zwischen Kolben und Führungshülsenbereich eingesetzten Dichtungen bestehen jedoch insbesondere bei der Montage Nachteile, wobei die jeweiligen Dichtungen nicht immer präzise genug positioniert werden. Insbesondere aufgrund der zunehmenden Miniaturisierung der Druckzylinder werden immer kleinere Hinterschnitte für die Dichtungen zur Verfügung gestellt, sodass eine Montage der Dichtungen immer schwieriger wird.

Es ist daher die Aufgabe der vorliegenden Erfindung, diese aus dem Stand der Technik bekannten Nachteile zu beheben und insbesondere einen Druckzylinder zur Verfügung zu stellen, der sowohl besonders verschleißfest als auch einfach montierbar sein soll.

Dies wird erfindungsgemäß mit den Merkmalen des Anspruchs 1 gelöst.

Durch die Ausbildung der Dichtung aus einem schrumpfbaren Material wird die Montage insofern vereinfacht, dass die Gefahr einer Beschädigung der Dichtung deutlich gesenkt wird. Bei der Montage wird die Dichtung in den Kolben eingelegt und zusammen mit diesem in einem Arbeitsschritt auf den Führungshülsenbereich aufgeschoben. Dadurch lässt sich die Dichtung zusammen mit dem Kolben im Wesentlichen ohne Kontaktierung des Führungshülsenbereiches aufschieben und in die gewünschte Position bringen. Anschließend braucht lediglich die Temperatur des Druckzylinders erhöht werden, sodass die Dichtung schrumpft, d.h. sich dichtend an dem jeweiligen Bauteil anlegt. Die Dichtung ist somit nach dem Prinzip eines Schrumpfschlauches ausgeführt. Nach dem Schrumpfen ist sie aufgrund ihrer Vorspannkraft vorzugsweise sicher an dem Führungshülsenbereich gehalten / abgestützt.

Weitere vorteilhafte Ausführungsformen sind in den Unteransprüchen beansprucht und nachfolgend näher erläutert.

Von Vorteil ist es insbesondere, wenn die Dichtung als Dichtring ausgestaltet / ausgebildet ist, da sie dann in Umfangsrichtung durchgängig dichtend angelegt ist.

Weist die Dichtung einen runden Querschnitt, vorzugsweise einen kreisrunden Querschnitt, auf, d.h. ist die Dichtung als O-Ring ausgeführt, ist die Herstellung der Dichtung besonders kostengünstig.

Ist der Spalt in radialer Richtung zwischen einer Außenmantelfläche des Führungshülsenbereiches und einer Innenseite des Kolbens ausgebildet, ist die Dichtung besonders platzsparend in dem Druckzylinder integriert.

In diesem Zusammenhang ist es besonders zweckmäßig, wenn die Dichtung in eine radiale Ausnehmung des Kolbens hinein ragt. Somit wird der Platzbedarf der Dichtungsaufnahme weiter verringert.

Ist die Dichtung so beschaffen, dass sie bei einem Überschreiten einer Grenztemperatur (Kerntemperatur der Dichtung) in einem Betriebszustand des Druckzylinders ihren Innendurchmesser verkleinert, d.h. in ihren Abmaßen schrumpft, ist die Dichtung besonders geschickt dauerhaft montierbar. Dadurch ist das schrumpfbare Material ein temperaturabhängig, insbesondere mit Temperaturerhöhung / Wärmezufuhr, schrumpfbares Material. Weiterhin ist es vorteilhaft, wenn das schrumpfbare Material ein Formgedächtnismaterial ist.

Von Vorteil ist es weiterhin, wenn die Dichtung so auf den Führungshülsenbereich abgestimmt ist, dass sie sich bei Überschreiten der Grenztemperatur an den Führungshülsenbereich anlegt / andrückt. Dadurch wird die fertige Montage des Druckzylinders besonders einfach erreicht.

In ihrem zusammengeschrumpften Zustand ist die Dichtung dann vorzugsweise zu der Innenseite des Kolbens beabstandet ausgerichtet und dichtend an der Außenmantelfläche des Führungshülsenbereiches angelegt. Dadurch ist eine besonders effektive Dichtung umgesetzt, sodass die Hystereseeigenschaften des Druckzylinders nicht nachteilig beeinflusst werden.

In diesem Zusammenhang ist es auch zweckmäßig, wenn die Ausnehmung des Kolbens derart auf die Position der Dichtung in ihrem zusammengeschrumpften Zustand abgestimmt ist, dass der Kolben in seinem Verschiebebereich stets axial beabstandet zu der Dichtung, d.h. frei bewegbar relativ zu der Dichtung, angeordnet ist. Dadurch wird die Haltbarkeit der Dichtung weiter gesteigert.

Ist weiterhin ein einen aus dem Gehäuse hinausragenden Längsbereich des Kolbens abdeckender Faltenbalg vorgesehen, wird die Abdichtung des Druckraums zur Umgebung hin zusätzlich verbessert.

Hierbei ist es auch vorteilhaft, wenn der Faltenbalg radial außerhalb des Kolbens angeordnet ist, vorzugsweise zwischen dem Gehäuse und einem ein Betätigungslager aufnehmenden Endbereich des Kolbens eingespannt ist.

Des Weiteren betrifft die Erfindung eine Kupplung für einen Antriebsstrang eines Kraftfahrzeuges, worin ein den Druckzylinder nach zumindest einer der zuvor beschriebenen Ausführungsformen aufweisendes Kupplungsbetätigungssystem enthalten ist. Dadurch ist auch die Kupplung besonders langlebig und sicher betätigbar.

In anderen Worten ausgedrückt, ist erfindungsgemäß ein Schrumpfring in Form der Dichtung in einer Aussparung / Ausnehmung des Nehmerzylinderkolbens (Kolben) eingesetzt. Es ist vorgeschlagen, den Schrumpfring zwischen einer Kolbennut (Ausnehmung) und dem Gehäuse / Nehmerzylindergehäuse (in Form des Führungshülsenbereiches) einzusetzen, wobei sich der Schrumpfring beim Zusammenbau leicht montieren lässt und durch die Betriebswärme auf die Führungshülse (Führungshülsenbereich) schrumpft, sodass eine Dichtwirkung erzielt wird.

Die Erfindung wird nun nachfolgend anhand von Figuren näher erläutert.

Es zeigen:
- Fig. 1: eine Längsschnittdarstellung eines erfindungsgemäßen Druckzylinders nach einem bevorzugten Ausführungsbeispiel,
- Fig. 2: eine Detailansicht des Druckzylinders in dem in Fig. 1 mit "II" gekennzeichnet Bereiches zwischen einem Kolben sowie einem Führungshülsenbereich eines Gehäuses des Druckzylinders, sodass eine dort eingesetzte Dichtung in ihrem Ausgangszustand zu erkennen ist, und
- Fig. 3: eine Detailansicht des Druckzylinders ähnlich zu Fig. 2, wobei die Dichtung in ihrem aufgeschrumpften Zustand abgebildet ist, in dem sie auf den Führungshülsenbereich fest anliegt.

Die Figuren sind lediglich schematischer Natur und dienen ausschließlich dem Verständnis der Erfindung. Die gleichen Elemente sind mit denselben Bezugszeichen versehen.

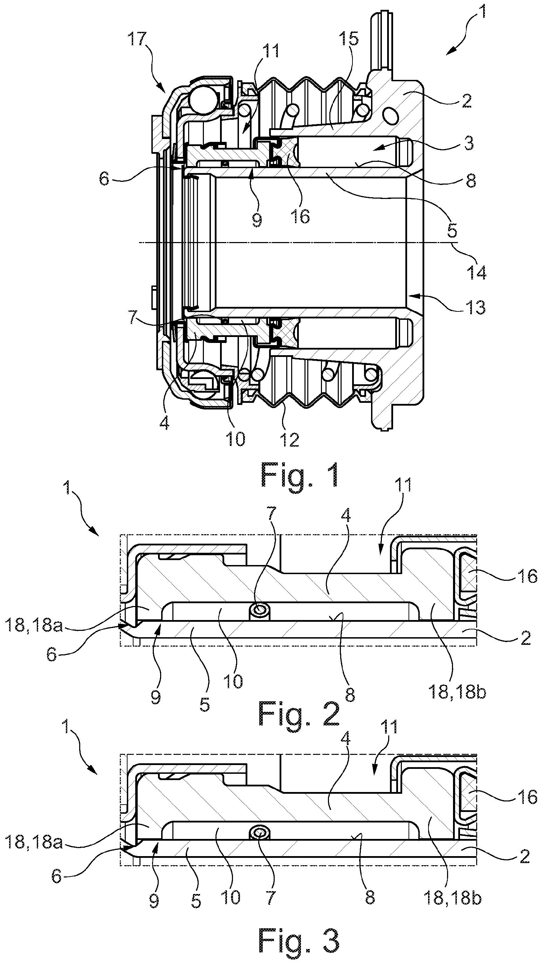

Mit Fig. 1 ist der Aufbau eines erfindungsgemäßen Druckzylinders 1 veranschaulicht. Der Druckzylinder 1 ist als ein Bestandteil eines hier der Übersichtlichkeit halber nicht weiter dargestellten Kupplungsbestätigungssystems einer Kupplung, nämlich einer Reibungskupplung, eines Antriebsstranges eines Kraftfahrzeuges ausgebildet. Der Druckzylinder 1 ist als ein Nehmerzylinder ausgeführt. Der Druckzylinder 1 ist desweiteren als hydraulischer Druckzylinder / hydraulischer Nehmerzylinder ausgeführt. Folglich dient der Druckzylinder 1 im Betrieb zum Aus- oder Einrücken der hier der Übersichtlichkeit halber nicht weiter dargestellten Kupplung.

Der Druckzylinder 1 ist insbesondere als CSC ("Concentric Slave Cylinder"), d.h. als konzentrischer Nehmerzylinder ausgebildet. Dementsprechend weist der Druckzylinder 1 eine ihn gesamtheitlich durchdringende Durchgangsöffnung 13 auf, durch die im Betrieb zumindest eine Getriebeeingangswelle eines Getriebes des Antriebsstranges ragt. Die Durchgangsöffnung 13 ist in axialer Richtung des Druckzylinders 1, d.h. entlang einer Längsachse 14 (entsprechend einer Drehachse der Getriebeeingangswelle im Betrieb) im Wesentlichen durch das Gehäuse 2 des Druckzylinders 1 bestimmt. Das Gehäuse 2 bildet einen sich axial erstreckenden Führungshülsenbereich 5 aus, der rohrförmig ausgeführt ist. Der Führungshülsenbereich 5 definiert eine Außenkontur der Durchgangsöffnung 13.

In dem Gehäuse 2 ist zudem ein Druckraum 3 in Form eines Ringraumes ausgebildet. Der Druckraum 3 ist in radialer Richtung zwischen dem Führungshülsenbereich 5 und einem Außenwandbereich 15 des Gehäuses 2 angeordnet. Führungshülsenbereich 5 und Außenwandbereich 15 sind stoffeinteilige Bestandteil des Gehäuses 2. In/an dem Gehäuse 2 ist ein Kolben 4 verschiebbar aufgenommen. Der Kolben 4 dient zur Betätigung der Kupplung. Der Kolben 4 ist insbesondere in radialer Richtung des Druckzylinders 1 nach innen entlang dem Führungshülsenbereich 5 verschiebbar geführt. In radialer Richtung nach außen dient der Außenwandbereich 15 zur Führung des Kolbens 4. Der Druckraum 3 ist seitens des Kolbens 4 durch eine an ihm angeordnete Kolbendichtung 16 zur Umgebung hin abgeschlossen. Der Kolben 4 ist soweit in axialer Richtung des Druckzylinders 1 verschiebbar, dass die Kolbendichtung 16 in jeglichem Verschiebebereich des Kolbens 4 den Druckraum 3 zur Umgebung hin abdichtet.

Des Weiteren ist in Fig. 1 erkennbar, dass auf übliche Weise auf einer der Kolbendichtung 16 axial abgewandten Seite des Kolbens 4 ein Betätigungslager 17 verschiebefest an dem Kolben 4 angeordnet ist. Das Betätigungslager 17 liegt im Betrieb dann auf übliche Weise wiederum an einem Kupplungsbetätigungselement, wie einer Tellerfeder oder einem Drucktopf, axialfest an.

Zur zusätzlichen Abdichtung des Druckraumes 3 gegenüber Staub / Schmutz ist eine Dichtung 7 in dem Druckzylinder 1 eingesetzt. Die Dichtung 7 besteht aus einem schrumpfbaren Material. Die Dichtung 7 besteht insbesondere vollständig aus dem schrumpfbaren Material, wobei die Dichtung 7 in weiteren Ausführungen auch nur teilweise aus dem schrumpfbaren Material besteht. Die Dichtung 7 ist als Dichtring / Dichtungsring umgesetzt. Die Dichtung 7 weist die Form eines O-Ringes auf.

Die Dichtung 7 ist, wie in der Detaildarstellung nach Fig. 2 zu erkennen, in einem radialen Spalt 6 / Spaltbereich zwischen dem Führungshülsenbereich 5 und dem Kolben 4 eingesetzt. Die Dichtung 7 ist, in radialer Richtung des Druckzylinders 1 gesehen, zwischen einer (radialen) Außenmantelfläche 8 des Führungshülsenbereiches 5 sowie einer radialen Innenseite 9 des Kolbens 4 angeordnet. Die Dichtung 7 ist zumindest mit einem Abschnitt in radialer Richtung gesehen in einer Ausnehmung 10 des Kolbens 4 angeordnet / hineinragend. Die Ausnehmung 10 des Kolbens 4 ist als eine in Umfangsrichtung vollständig umlaufende Nut ausgebildet. Die Ausnehmung 10 erstreckt sich in axialer Richtung des Kolbens 4 nicht entlang der gesamten Länge des Kolbens 4, sondern ist zu den jeweiligen axialen Seiten des Kolbens 4 durch Abstützbereiche 18; 18a, 18b begrenzt / abgeschlossen.

In den Fign. 1 und 2 ist die Dichtung 7, unter Ausbildung des Dichtringes / O-Ringes in ihrem Ausgangszustand dargestellt. In diesem Ausgangszustand ist der Druckzylinder 1 zwar bereits fertig montiert, jedoch noch nicht tatsächlich aktiv betrieben / noch nicht auf Betriebstemperatur angelangt. In dem Ausgangszustand ist die Dichtung 7 so ausgebildet, dass sie mit ihrem Innendurchmesser erweitert ist und in zumindest einzelnen Umfangsbereichen radial beabstandet zu dem Führungshülsenbereich 5 angeordnet ist. In diesem Ausgangszustand ist die Dichtung 7 gar so (in ihrem Innendurchmesser) erweitert, dass sie mit ihrer Außenseite an der Innenseite 9 des Kolbens 4 anliegt.

Um letztendlich eine beabsichtigte Schmutzabdichtung durch die Dichtung 7 im Betrieb des Druckzylinders 1 zu gewährleisten, reagiert das schrumpfbare Material der Dichtung 7 auf eine Temperaturerhöhung während des Betriebes des Druckzylinders 1. Das schrumpfbare Material ist daher als temperaturabhängig, nämlich durch Wärmezufuhr, aktivierbares Material ausgebildet. Ein fertig ausgeschrumpfter Zustand der Dichtung 7 ist in Fig. 3 veranschaulicht. Überschreitet die Temperatur der Dichtung 7 einen bestimmten Grenzwert / eine bestimmte Grenztemperatur, verringert sich der Innendurchmesser 7 der Dichtung 7. In dem aufgeschrumpften Zustand liegt die Dichtung 7 dann bündig / dichtend an der Außenmantelfläche 8 an. Die Dichtung 7 ist dann auch wiederum zu der Innenseite 9 des Kolbens 4 beabstandet. Die Dichtung 7 erstreckt sich in radialer Richtung gesehen weiter als der durch die Abstützbereiche 18a, 18b ausgebildete Spalt 6, sodass die Dichtung 7 in dem aufgeschrumpften Zustand in die Ausnehmung 10 in radialer Richtung hineinragt.

Die Position der Dichtung 7 in dem aufgeschrumpften Zustand ist derart auf die (axiale) Länge der Ausnehmung 10 abgestimmt, dass der Kolben 4 mit seinen Abstützbereichen 18a, 18b in dem Betriebszustand des Druckzylinders 1 stets in jeglichem Verschiebezustand / Verschiebebereich beabstandet zu der Dichtung 7 angeordnet ist.

Zurückkommend auf Fig. 1, weist der Druckzylinder 1 zudem einen Faltenbalg 12 auf. Dieser Faltenbalg 12 ist einerseits / mit einem axialen ersten Ende in dem Gehäuse 2 verankert und andererseits / mit einem dem ersten Ende gegenüberliegenden zweiten axialen Ende verschiebefest mit dem Kolben 4, nämlich mittels des Betätigungslagers 17, verschiebefest verbunden. Der Faltenbalg 12 weist eine geschlossene Kontur auf und dient als Dichtungsbalg 12 im Betrieb. Der Faltenbalg 12 ist zu einer radialen Außenseite des Kolbens 4 hin angeordnet und dichtet den Kolben 4 zusätzlich zur Dichtung 7 ebenfalls gegenüber Staub sowie Schmutz ab. Insbesondere dichtet der Faltenbalg 12 einen aus dem Gehäuse 2 hinausragenden Längsbereich 11 des Kolbens 4 stets zur Umgebung hin ab.

In anderen Worten ausgedrückt, sollen die aus der Elektrik bekannten Schrumpfschlauchprinzipien auf einen Druckzylinder 1 übertragen werden. Insbesondere wird ein Formgedächtnismaterial in Form des schrumpfbaren Materials verwendet, das durch eine Molekülstruktur und einen entsprechenden Herstellprozess unter einer gewissen Temperatur / Temperaturerhöhung schrumpft. Die Montage des Druckzylinders 1 geschieht im Wesentlichen in zwei Schritten. In einem ersten Schritt wird der Schrumpfring (Dichtung 7) in den Kolben 4 eingelegt und gemeinsam mit diesem auf das Führungsrohr (Führungshülsenbereich 5) montiert. In einem zweiten Schritt wird durch die in einer Kupplungsglocke / einem Gehäuse der Kupplung auftretende Betriebswärme der Schrumpfring 7 zusammengezogen und auf das Führungsrohr 5 aufgezogen. Dadurch wird der radiale Spalt 6 abgeschlossen.

### Bezugszeichenliste

- 1: Druckzylinder
- 2: Gehäuse
- 3: Druckraum
- 4: Kolben
- 5: Führungshülsenbereich
- 6: Spalt
- 7: Dichtung
- 8: Außenmantelfläche
- 9: Innenseite
- 10: Ausnehmung
- 11: Längsbereich
- 12: Faltenbalg
- 13: Durchgangsöffnung
- 14: Längsachse
- 15: Außenwandbereich
- 16: Kolbendichtung
- 17: Betätigungslager
- 18: Abstützbereich
- 18a: erster Abstützbereich
- 18b: zweiter Abstützbereich

## Patentansprüche

1. Druckzylinder (1) für ein Kupplungsbestätigungssystem eines Kraftfahrzeuges, mit einem Gehäuse (2) und einem mit dem Gehäuse (2) einen Druckraum (3) einschließenden Kolben (4), wobei der Kolben (4) entlang eines Führungshülsenbereiches (5) des Gehäuses (2) verschiebbar ist, **dadurch gekennzeichnet, dass** in einem Spalt (6) zwischen dem Kolben (4) und dem Führungshülsenbereich (5) eine aus einem schrumpfbaren Material bestehende Dichtung (7) eingesetzt ist, welche nach dem Prinzip eines Schrumfschlauches ausgeführt und durch Wärmezufuhr aktivierbar ist.

2. Druckzylinder (1) nach Anspruch 1, **dadurch gekennzeichnet, dass** die Dichtung (7) als Dichtring ausgebildet ist.

3. Druckzylinder (1) nach Anspruch 1 oder 2, **dadurch gekennzeichnet, dass** die Dichtung (7) einen runden Querschnitt aufweist.

4. Druckzylinder (1) nach einem der Ansprüche 1 bis 3, **dadurch gekennzeichnet, dass** der Spalt (6) in radialer Richtung zwischen einer Außenmantelfläche (8) des Führungshülsenbereiches (5) und einer Innenseite (9) des Kolbens (4) ausgebildet ist.

5. Druckzylinder (1) nach einem der Ansprüche 1 bis 4, **dadurch gekennzeichnet, dass** die Dichtung (7) in eine radiale Ausnehmung (10) des Kolbens (4) hineinragt.

6. Druckzylinder (1) nach einem der Ansprüche 1 bis 5, **dadurch gekennzeichnet, dass** die Dichtung (7) so beschaffen ist, dass sie bei einem Überschreiten einer Grenztemperatur in einem Betriebszustand des Druckzylinders (1) ihren Innendurchmesser verkleinert.

7. Druckzylinder (1) nach Anspruch 6, **dadurch gekennzeichnet, dass** die Dichtung (7) so auf den Führungshülsenbereich (5) abgestimmt ist, dass sie sich bei Überschreiten der Grenztemperatur an den Führungshülsenbereich (5) anlegt.

8. Druckzylinder (1) nach einem der Ansprüche 1 bis 7, **dadurch gekennzeichnet, dass** weiterhin ein einen aus dem Gehäuse (2) hinausragenden Längsbereich (11) des Kolbens (4) abdeckender Faltenbalg (12) vorgesehen ist.

9. Druckzylinder (1) nach Anspruch 8, **dadurch gekennzeichnet, dass** der Faltenbalg (12) radial außerhalb des Kolbens (4) angeordnet ist.

10. Kupplung für einen Antriebsstrang eines Kraftfahrzeuges, mit einem einen Druckzylinder (1) nach einem der Ansprüche 1 bis 9 aufweisenden Kupplungsbetätigungssystem.

## Claims

1. A pressure cylinder (1) for a clutch actuation system of a motor vehicle, having a housing (2) and a piston (4) which, together with the housing (2) encloses a pressure chamber (3), the piston (4) being displaceable along a guide sleeve region (5) of the housing (2), **characterised in that** a seal (7) made from a shrinkable material is inserted in a gap (6) between the piston (4) and the guide sleeve region (5), which seal is designed according to the principle of a shrink hose and can be activated by applying heat.

2. The pressure cylinder (1) according to claim 1, **characterised in that** the seal (7) is formed as a sealing ring.

3. The pressure cylinder (1) according to claim 1 or 2, **characterised in that** the seal (7) has a round cross-section.

4. The pressure cylinder (1) according to any one of claims 1 to 3, **characterised in that** the gap (6) is formed in the radial direction between an outer lateral surface (8) of the guide sleeve region (5) and an inner side (9) of the piston (4).

5. The pressure cylinder (1) according to any one of claims 1 to 4, **characterised in that** the seal (7) protrudes into a radial recess (10) of the piston (4).

6. The pressure cylinder (1) according to any one of claims 1 to 5, **characterised in that** the seal (7) is designed in such a way that it reduces its inner diameter when a limit temperature is exceeded in an operating state of the pressure cylinder (1).

7. The pressure cylinder (1) according to claim 6, **characterised in that** the seal (7) is matched to the guide sleeve region (5) in such a way that it rests against the guide sleeve region (5) when the limit temperature is exceeded.

8. The pressure cylinder (1) according to any one of claims 1 to 7, **characterised in that** a bellows (12) covering a longitudinal region (11) of the piston (4) protruding from the housing (2) is also provided.

9. The pressure cylinder (1) according to claim 8, **characterised in that** the bellows (12) is arranged radially outside of the piston (4).

10. A clutch for a drive train of a motor vehicle, having a clutch actuation system having a pressure cylinder (1) according to any one of claims 1 to 9.

## Revendications

1. Cylindre de pression (1) pour un système de commande d'embrayage d'un véhicule à moteur, comprenant un boîtier (2) et un piston (4) définissant un espace de pression (3) avec le boîtier (2), le piston (4) pouvant se déplacer le long d'une zone de manchon de guidage (5) du boîtier (2), **caractérisée en ce qu'**une garniture d'étanchéité (7) constituée d'un matériau rétractable est logée dans un espace (6) entre le piston (4) et la zone de manchon de guidage (5), laquelle garniture est réalisée selon le principe d'un tube rétractable et peut être activée par alimentation de chaleur.

2. Cylindre de pression (1) selon la revendication 1, **caractérisé en ce que** la garniture d'étanchéité (7) est conçue comme une bague d'étanchéité.

3. Cylindre de pression (1) selon la revendication 1 ou 2, **caractérisé en ce que** la garniture d'étanchéité (7) présente une section transversale ronde.

4. Cylindre de pression (1) selon l'une quelconque des revendications 1 à 3, **caractérisé en ce que** l'espace (6) est formé dans la direction radiale entre une surface d'enveloppe extérieure (8) de la zone de manchon de guidage (5) et une face intérieure (9) du piston (4).

5. Cylindre de pression (1) selon l'une quelconque des revendications 1 à 4, **caractérisé en ce que** le garniture d'étanchéité (7) fait saillie dans une cavité radiale (10) du piston (4).

6. Cylindre de pression (1) selon l'une quelconque des revendications 1 à 5, **caractérisé en ce que** la garniture d'étanchéité (7) est conçue de manière à réduire son diamètre intérieur lorsqu'une température limite est dépassée dans un état de fonctionnement du cylindre de pression (1).

7. Cylindre de pression (1) selon la revendication 6, **caractérisé en ce que** la garniture d'étanchéité (7) est adaptée à la zone de manchon de guidage (5) de telle sorte qu'elle repose contre la zone de manchon de guidage (5) lorsque la température limite est dépassée.

8. Cylindre de pression (1) selon l'une quelconque des revendications 1 à 7, **caractérisé en ce qu'il** est prévu en outre un soufflet (12) recouvrant une région longitudinale (11) du piston (4) dépassant du boîtier (2).

9. Cylindre de pression (1) selon la revendication 8, **caractérisé en ce que** le soufflet (12) est disposé radialement à l'extérieur du piston (4).

10. Embrayage pour une transmission d'un véhicule à moteur, comprenant un système de commande d'embrayage présentant un cylindre de pression (1) selon l'une quelconque des revendications 1 à 9.
